# EUROPÄISCHE PATENTSCHRIFT

(11) **EP 0 662 216 B1**
(45) Veröffentlichungstag und Bekanntmachung des Hinweises auf die Patenterteilung: **18.12.1996**
(21) Anmeldenummer: 93919244.9
(22) Anmeldetag: 02.09.1993
(51) Int. Cl.: G01N 21/72

(54) **VERFAHREN ZUR SPEKTRALEN ANALYSE VON TECHNISCHEN FLAMMEN DURCH OPTISCHE EMISSIONSMESSUNG UND ANORDNUNG HIERFÜR**
INDUSTRIAL FLAME SPECTRAL ANALYSIS PROCESS AND DEVICE BY MEASUREMENT OF OPTICAL EMISSION
PROCEDE ET DISPOSITIF D'ANALYSE SPECTRALE DE FLAMMES INDUSTRIELLES PAR MESURE OPTIQUE DES EMISSIONS

(30) Priorität: 23.09.1992 DE 4231777
(43) Veröffentlichungstag der Anmeldung: 12.07.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: MAURUS, Tacke, D-79104 Freiburg (DE); HELMUT, Wolf, D-79249 Merzhausen (DE)
(86) Internationale Anmeldenummer: EP9302368
(87) Internationale Veröffentlichungsnummer: WO9408228

(56) Entgegenhaltungen:
- WO-A-91/05241
- GB-A- 2 132 342
- US-A- 2 977 479
- US-A- 4 896 965
- BIOMEDICAL INSTRUMENTATION & TECHNOLOGY, Band 23, Nr. 6, November/Dezember 1989, KLAUS MOLLGAARD "Acoustic Gas Measurement" pages 495-497

## Beschreibung

Die Erfindung betrifft ein Verfahren zur spektralen Analyse von technischen Flammen durch optische Emissionsmessung, bei dem die relativ schmalbandig emittierte Strahlung einer Flamme und/oder ihrer Abgase und gleichzeitig vorliegende vergleichsweise breitbandige Anteile einer Hintergrund- bzw. Störstrahlung durch ein optisches Schmalband-Filter getrennt werden und die durch das Filter hindurchtretende Strahlung detektiert wird.

Die Erfindung bezieht sich ferner auf eine Anordnung zur spektralen Analyse von technischen Flammen und/oder ihrer Abgase durch optische Emissionsmessung.

Es ist bekannt, zur Regelung und Überwachung von Feuerungen Gasanalysen im Abgas durchzuführen. Die dazu notwendigen Geräte, mit denen im wesentlichen solche Komponenten wie CO und NO erfaßt werden können, sind jedoch aufwendig, das heißt mit verhältnismäßig großen Investitions- und Betriebskosten verbunden, so daß deren Einsatz in kleineren Feuerungsanlagen unwirtschaftlich ist.

Es ist ferner allgemein bekannt, durch Spektralanalyse einzelne Gaskomponenten einer Flamme nachzuweisen. Dabei werden die relativ schmalbandige Emission der Flamme und die gleichzeitig vorliegenden breitbandigen Anteile der beispielsweise durch Emission des Gehäuses der Feuerungsanlage oder durch Emission von Staub hervorgerufenen Hintergrundstrahlung mit Hilfe eines einem die Strahlung empfangenden Detektor vorgeschalteten optischen Schmalbandfilters größtenteils getrennt. Neben dem durch das Filter hindurchtretenden auf die zu analysierende Gaskomponente zurückgehenden Strahlungsanteil passieren jedoch auch Anteile der Hintergrundstrahlung das Filter. Beide Strahlungsanteile werden vom Detektor erfaßt, so daß im Detektorausgangssignal neben dem Nutzsignal eine Störkomponente enthalten ist. Dies hat zur Folge, daß in Abhängigkeit von der Größe des Störsignals eine untere Nachweisgrenze für das Nutzsignal gegeben ist und somit gegebenenfalls Spuren von Schadstoffen nicht nachgewiesen werden können.

Der Erfindung liegt daher die Aufgabe zugrunde, ein Verfahren der eingangs genannten Art anzugeben, mit dem eine schnelle, zuverlässige und hochempfindliche spektrale Analyse technischer Flammen und ihrer Abgase möglich ist, so daß beispielsweise auch niedrige Schadstoffkonzentrationen festgestellt werden können.

Der Erfindung liegt ferner die Aufgabe zugrunde, eine wenig aufwendige Anordnung zur spektralen Emissionsanalyse technischer Flammen und ihrer Abgase zu schaffen, die mit einer großen Empfindlichkeit und einer hohen Ansprechgeschwindigkeit arbeitet.

Die vorgenannte Aufgabe wird erfindungsgemäß dadurch gelöst, daß gleichzeitig und unabhängig voneinander die Emission zumindest zweier Gaskomponenten ein und derselben Flamme mit natürlicher Flackerfrequenz detektiert wird, indem die durch ein erstes auf eine erste Gaskomponente abgestimmtes schmalbandiges Filter hindurchtretende Strahlung von einem ersten Detektor empfangen und ein erstes Detektorausgangssignal gebildet und die durch ein zweites auf eine zweite Gaskomponente abgestimmtes schmalbandiges Filter hindurchtretende Strahlung von einem zweiten Detektor empfangen und ein zweites Detektorausgangssignal gebildet wird, und daß die Korrelation der zeitlichen Funktionen der Detektorausgangssignale infolge der den Gaskomponenten aufgeprägten gleichen natürlichen Flackerfrequenz der Flamme bei der weiteren Detektorausgangssignalverarbeitung zur Unterdrückung derjenigen Detektorausgangssignalanteile herangezogen wird, die von den durch die Filter hindurchtretenden Hintergrund- bzw. Störstrahlungsanteilen erzeugt werden.

Beim erfindungsgemäßen Verfahren wird die Tatsache genutzt, daß Flammen flackern und die von den Gaskomponenten ein und derselben Flamme herrührende, von den zugeordneten Detektoren aufgenommene Strahlung die gleiche Flackerfrequenz aufweist, die von den nämlichen Detektoren gleichzeitig empfangenen Hintergrund- bzw. Störstrahlungsanteile jedoch einen ganz anderen zeitlichen Verlauf haben. Die Flackerfrequenzen liegen im Bereich akustischer Frequenzen und sind damit im allgemeinen höher als die Frequenzen der Hintergrund- bzw. Störstrahlung. So unterliegt beispielsweise die durch Abstrahlung von Gehäusewänden hervorgerufene Hintergrund- bzw. Störstrahlung nur einer verhältnismäßig langsamen zeitlichen Änderung.

Die Unterdrückung der durch Hintergrund- bzw. Störstrahlungsanteile erzeugten Detektorausgangssignalanteile erfolgt in vorteilhafter Weise analog dem Prinzip der lock-in-Technik durch phasenempfindliche Gleichrichtung.

Vorzugsweise wird in Abhängigkeit von den von ihren durch Hintergrund- bzw. Störstrahlungsanteile hervorgerufenen Detektorausgangssignalanteilen befreiten Detektorausgangssignalen ein die Flamme erzeugender Verbrennungsprozeß gesteuert.

Es ist auch möglich, daß anstelle der Emissions- eine Absorptionsmessung durchgeführt wird, indem die durch die Flamme und/oder ihre Abgase absorbierte Strahlung detektiert wird.

Die der Erfindung zugrunde liegende Aufgabe wird ferner durch eine Anordnung wie sie im Anspruch 5 definiert ist erfindungsgemäß gelöst.

Aus WO 91/05241 A1 ist zwar eine Vorrichtung bekannt, die zwei optische Filter, zwei Detektoren und einen die Detektorausgangssignale verarbeitenden lock-in-Verstärker aufweist. Allerdings arbeitet diese Vorrichtung mit einem zwischen Flamme und Filtern angeordneten mechanischen Chopper zur Signalmodulation. Im Unterschied zur quasi standardmäßigen Anordnung mit einem Chopper zur periodischen Signalmodulation mit anschließender lockin-Verstärker-Filterung werden aber bei der erfindungsgemäßen Anordnung gemäß Anspruch 5 natürliche statistische Signalfluktuationen ausgenutzt und diese bei der Signalauswertung miteinander korreliert. Der Einsatz eines Choppers gemäß WO 91/05241 A1 hat nämlich den gravierenden Nachteil, daß hierbei die z.B. von einem Gehäuse herrührende Untergrundstrahlung mitmoduliert und damit eine Störkomponente mitdetektiert wird (und zwar sowohl im Referenz- als auch im Analyse-Kanal), die vom Nutzsignal nicht mehr unterscheidbar ist. Die in WO 91/05241 A1 beschriebene Vorrichtung ist mithin nicht geeignet, die der Erfindung zugrunde liegende Aufgabe zu lösen.

Eine vorteilhafte Ausführungsform der erfindungsgemäßen Anordnung sieht vor, daß die Signalverarbeitungsschaltung einen ersten Demodulator und einen ersten Komparator aufweist, denen eingangsseitig nach kapazitiver Gleichspannungstrennung und Verstärkung das Ausgangssignal des ersten Detektors zugeführt ist, und daß die Signalverarbeitungsschaltung einen zweiten Demodulator und einen zweiten Komparator aufweist, denen eingangsseitig nach kapazitiver Gleichspannungstrennung und Verstärkung das Ausgangssignal des zweiten Detektors zugeführt ist, wobei der erste Komparator zur Erzeugung eines Referenzsignals dient, mit dem der zweite Demodulator beaufschlagt ist, und der zweite Komparator zur Erzeugung eines Referenzsignales dient, mit dem der erste Demodulator beaufschlagt ist, und daß den Demodulatoren jeweils ein Tiefpaßfilter nachgeschaltet ist.

Mit der erfindungsgemäßen Anordnung ist es möglich, mit großer Empfindlichkeit und hoher Ansprechgeschwindigkeit direkt in der Flamme und nicht erst in den Abgasen Schadstoffe wie CO oder NO zu erfassen. Die an den Tiefpaßfiltern zur Verfügung stehenden Ausgangssignale können in vorteilhafter Weise zur Steuerung des die Flamme erzeugenden Verbrennungsprozesses genutzt werden, um beispielsweise den Ausstoß von Schadstoffen zu minimieren.

Die Erfindung wird nachstehend anhand eines Ausführungsbeispiels und einer zugehörigen Zeichnung näher erläutert. In der Zeichnung zeigen:
- Figur 1: das Schema einer Anordnung zur spektralen Emissionsanalyse einer Flamme nach dem Stand der Technik;
- Figur 2: das Schema einer erfindungsgemäßen Anordnung zur spektralen Emissionsanalyse einer Flamme und
- Figur 3: eine mögliche Schaltungsanordnung zur Signalverarbeitung von Detektorausgangssignalen wie sie mit einer Anordnung nach Figur 2 gewonnen werden.

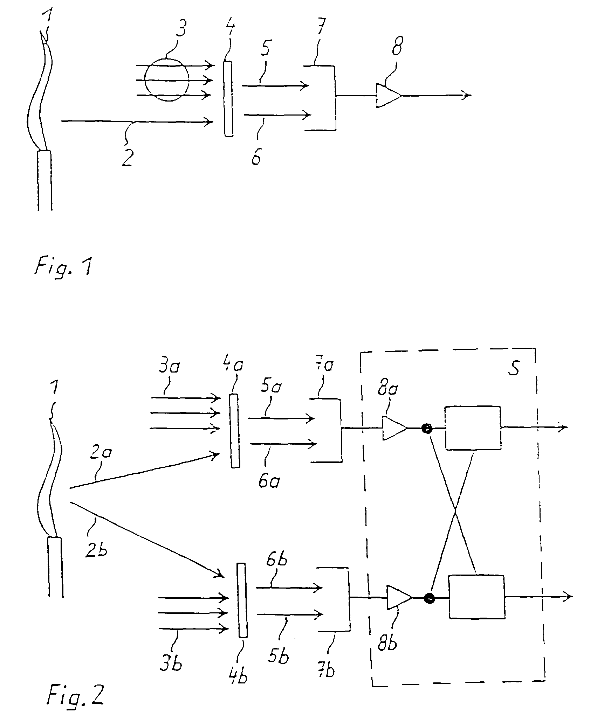

Gemäß der in Figur 1 schematisch dargestellten, den Stand der Technik repräsentierenden Anordnung zur spektralen Emissionsanalyse einer Flamme 1 wird von der Flamme 1 emittierte, verhältnismäßig schmalbandige Strahlung 2 von gleichzeitig vorliegender, vergleichsweise breitbandiger, beispielsweise durch Emission an Gehäusewänden entstehender Hintergrund- bzw. Störstrahlung 3 mit Hilfe eines optischen Schmalbandfilters 4 zum größten Teil getrennt. Neben einem durch das Filter 4 hindurchtretenden auf die zu analysierende Gaskomponente, beispielsweise CO, zurückgehenden Strahlungsanteil 6 passieren jedoch auch in der Zeichnung mit 5 bezeichnete Anteile der Hintergrund- bzw. Störstrahlung 3 das Filter 4. Beide Strahlungsanteile 5 und 6 werden von einem dem Filter 4 nachgeordneten Detektor 7 erfaßt. Das heißt, daß vom Detektor 7 gebildete und mittels Verstärkers 8 verstärkte Ausgangssignal enthält neben dem Nutzsignal, dessen Größe ein Maß für Menge und Temperatur der zu analysierenden Gaskomponente der Flamme 1 ist, auch ein Störsignal. Infolge dieses Störsignals ist für das Nutzsignal eine untere Nachweisgrenze gegeben. Dem Nachweis von in geringer Konzentration vorliegenden Gaskomponenten sind somit Grenzen gesetzt.

Mit dem erfindungsgemäßen Verfahren und der Anordnung, wie sie schematisch in Figur 2 dargestellt ist, wird hier Abhilfe geschaffen, das heißt eine wesentlich empfindlichere spektrale Emissionsanalyse der Flamme 1 möglich. Dabei werden gleichzeitig in zwei Kanälen a und b zwei unterschiedliche Gaskomponenten, beispielsweise CO₂ und CO, ein und derselben Flamme 1 analysiert. Hierzu weist jeder Kanal a bzw. b ein auf die jeweilige Gaskomponente abgestimmtes optisches Schmalbandfilter 4a bzw. 4b und einen dem Schmalbandfilter 4a bzw. 4b nachgeordneten Detektor 7a bzw. 7b auf. Mit dem Detektor 7a werden neben einem durch das Filter a hindurchtretenden Strahlungsanteil 6a der von der ersten Gaskomponente der Flamme 1 emittierten Strahlung 2a auch das Filter 4a passierende Strahlungsanteile 5a einer Hintergrund- bzw. Störstrahlung 3a empfangen. Der Detektor 7b empfängt neben einem durch das Filter 4b hindurchtretenden, in der Zeichnung mit 6b bezeichneten Strahlungsanteil der von der zweiten zu analysierenden Gaskomponente der Flamme 1 herrührenden Strahlung 2b gleichfalls das Filter 4b passierende Strahlungsanteile 5b einer Hintergrund- bzw. Störstrahlung 3b. Während den auf die zu analysierenden Gaskomponenten zurückgehenden Strahlungsanteilen 6a und 6b eine gleiche, im Bereich akustischer Frequenzen von 1 bis 1000 Hz liegenden Flackerfrequenz der Flamme 1 aufgeprägt ist, haben die Hintergrund- bzw. Störstrahlungsanteile 5a und 6b jedoch einen ganz anderen zeitlichen Verlauf, da die beispielsweise durch Abstrahlung an Gehäusewänden hervorgerufene Hintergrund- bzw. Störstrahlung 3a bzw. 3b in der Regel vergleichsweise wesentlich langsameren zeitlichen Änderungen unterliegt. Die Korrelation der zeitlichen Funktionen der von den Detektoren 7a und 7b gebildeten Ausgangssignale infolge der den beiden Gaskomponenten aufgeprägten gleichen Flackerfrequenz wird bei der weiteren Signalverarbeitung der Detektorausgangssignale zur Unterdrückung derjenigen Detektorausgangssignalanteile genutzt, die von den durch die Filter 4a und 4b hindurchtretenden Hintergrund- bzw. Störstrahlungsanteilen 5a und 5b erzeugt werden. Diese Signalverarbeitung kann dabei analog der phasenempfindlichen Gleichrichtung mit sogenannten Lock-in-Verstärkern - wie sie zur Unterdrückung von Rauschspannungen allgemein bekannt ist - erfolgen.

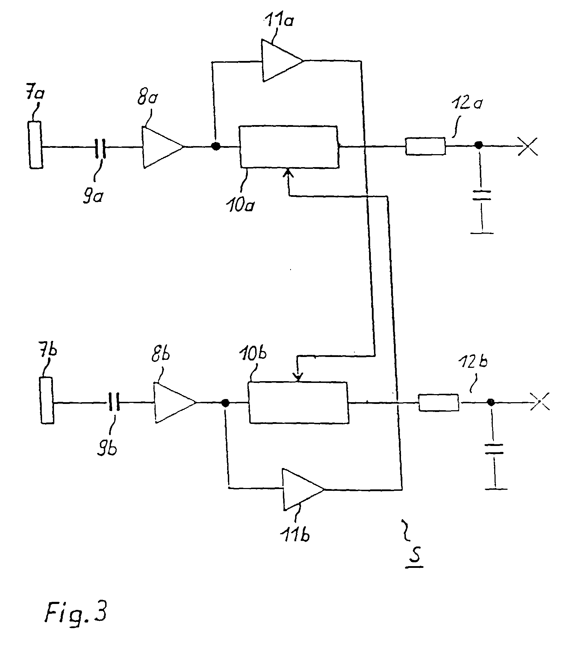

Eine mögliche Schaltungsanordnung 5 zur Signalverarbeitung der Detektorausgangsspannungssignale zeigt Figur 3. In diesem Fall wird das im Detektor 7a gebildete Ausgangsspannungssignal nach kapazitiver Gleichspannungstrennung mittels Kondensators 9a und Verstärkung mit Hilfe eines Verstärkers 8a einem ersten Demodulator 10a sowie einem ersten Komparator 11a, das im Detektor 7b gebildete Ausgangsspannungssignal hingegen nach kapazitiver Gleichspannungstrennung mittels Kondensators 9b und Verstärkung mit Hilfe eines Verstärkers 8b einem zweiten Demodulator 10b sowie einem zweiten Komparator 11b zugeführt. Mit Hilfe der Komparatoren 11a und 11b werden aus den AC-gekoppelten Detektorausgangsspannungssignalen Referenzsignale gewonnen, die mit Einheitsamplitude als Information nur das Vorzeichen enthalten. Während mit dem Referenzsignal vom Komparator 11a der zweite Demodulator 10b beaufschlagt ist, arbeitet das Referenzsignal vom Komparator 11b auf den ersten Demodulator 10a. Den Demodulatoren 10a und 10b ist ausgangsseitig jeweils ein Tiefpaßfilter 12a bzw. 12b nachgeschaltet, an dessen Ausgang schließlich Ausgangssignale zur Verfügung stehen, die weitestgehend von durch Hintergrund- bzw. Störstrahlung erzeugte Detektorausgangsspannungssignalanteile befreit sind und deren Größe somit ein Maß für Menge und Temperatur der jeweils über Kanal a bzw. b analysierten Gaskomponente ist. Mit der Schaltungsanordnung nach Figur 3 lassen sich Ausgangssignale für zwei Gaskomponenten gewinnen. Liegen diese Gaskomponenten in sehr unterschiedlichen Konzentrationen vor, so daß die eine Komponente nur ein sehr schwaches Detektorausgangsspannungssignal erzeugt, so wird sich diese Komponente nicht als Referenz eignen. In diesem Fall ist das demodulierte Detektorausgangsspannungssignal der "stärkeren" Komponente schlecht definiert und die gesamte Anordnung nur zur Emissionsmessung der "schwachen" Komponente geeignet.

Selbstverständlich ist es denkbar, gleichzeitig die Emission von mehr als zwei Gaskomponenten zu analysieren. Hierzu muß die Anordnung eine entsprechende Anzahl Kanäle aufweisen, denen jeweils ein auf die zu analysierende Gaskomponente abgestimmtes Schmalbandfilter sowie ein Detektor zugeordnet ist. Dabei ist es sinnvoll, wenn das Detektorausgangsspannungssignal zumindest einer "starken" Komponente, beispielsweise die von heißen CO₂ emittierte Strahlung, oder auch breitbandiges optisches Flackern zur Gewinnung des Referenzsignales herangezogen wird und die Demodulatoren für die "schwachen" Komponenten jeweils dieses Referenzsignal erhalten.

Die Ausgangssignale der einzelnen Kanäle können zur Überwachung dienen aber auch zur Regelung des die Flamme 1 erzeugenden Verbrennungsprozesses verwendet werden.

Zur weitergehenden Ausschaltung insbesondere von elektrischen Störsignalen ist es möglich, mit Hilfe der Tiefpaßfilter 12a und 12b die elektrische Bandbreite der Ausgangssignale einzuengen.

Es ist auch denkbar, anstelle der Emissions- eine Absorptionsmessung durchzuführen, d.h. gleichzeitig und unabhängig voneinander die Absorption zumindest zweier Gaskomponenten ein und derselben Flamme zu detektieren, indem die durch die Flamme und/oder ihre Abgase und durch ein erstes auf eine erste Gaskomponente abgestimmtes schmalbandiges Filter hindurchtretende Strahlung vom ersten Detektor empfangen und ein erstes Detektorausgangssignal gebildet und die durch die Flamme und/oder ihre Abgase und durch ein zweites auf eine zweite Gaskomponente abgestimmtes schmalbandiges Filter hindurchtretende Strahlung vom zweiten Detektor empfangen und ein zweites Detektorausgangssignal gebildet wird. Die weitere Detektorausgangssignalverarbeitung erfolgt sodann wie bei der Emissionsmessung beschrieben.

## Patentansprüche

1. Verfahren zur spektralen Analyse von technischen Flammen durch optische Emissionsmessung, bei dem die relativ schmalbandig emittierte Strahlung einer Flamme und/oder ihrer Abgase und gleichzeitig vorliegende vergleichsweise breitbandige Anteile einer Hintergrund- bzw. Störstrahlung durch ein optisches Schmalband-Filter getrennt werden und die durch das Filter hindurchtretende Strahlung detektiert wird,
**dadurch gekennzeichnet**,
daß gleichzeitig und unabhängig voneinander die Emission zumindest zweier Gaskomponenten ein und derselben Flamme (1) mit natürlicher Flackerfrequenz, d.h. ohne Chopper, detektiert wird, indem die durch ein erstes auf eine erste Gaskomponente abgestimmtes schmalbandiges Filter (4a) hindurchtretende Strahlung (5a, 6a) von einem ersten Detektor (7a) empfangen und ein erstes Detektorausgangssignal gebildet und die durch ein zweites auf eine zweite Gaskomponente abgestimmtes schmalbandiges Filter (4b) hindurchtretende Strahlung (5b, 6b) von einem zweiten Detektor (7b) empfangen und ein zweites Detektorausgangssignal gebildet wird, und daß die Korrelation der zeitlichen Funktionen der Detektorausgangssignale infolge der den Gaskomponenten aufgeprägten gleichen natürlichen Flackerfrequenz der Flamme (1) bei der weiteren Detektorausgangssignalverarbeitung zur Unterdrückung derjenigen Detektorausgangssignalanteile herangezogen wird, die von den durch die Filter (4a, 4b) hindurchtretenden Hintergrund- bzw. Störstrahlungsanteilen (5a, 5b) erzeugt werden.

2. Verfahren nach Anspruch 1,
**dadurch gekennzeichnet**,
daß anstelle der Emissions- eine Absorptionsmessung durchgeführt wird, indem die durch die Flamme (1) und/oder ihre Abgase absorbierte Strahlung detektiert wird.

3. Verfahren nach Anspruch 1 oder 2,
**dadurch gekennzeichnet**,
daß die Unterdrückung der durch Hintergrund- bzw. Störstrahlungsanteile (5a, 5b) erzeugten Detektorausgangssignalanteile analog dem Prinzip der phasenempfindlichen Gleichrichtung (lock-in-Technik) erfolgt.

4. Verfahren nach einem der Ansprüche 1 bis 3,
**dadurch gekennzeichnet**,
daß in Abhängigkeit von den von ihren durch Hintergrund- bzw. Störstrahlungsanteile (5a, 5b) hervorgerufenen Detektorausgangssignalanteilen befreiten Detektorausgangssignalen ein die Flamme (1) erzeugender Verbrennungsprozeß gesteuert wird.

5. Anordnung zur spektralen Analyse von technischen Flammen durch optische Emissionsmessung, die ein erstes optisches Schmalbandfilter und zumindest ein weiteres, vom ersten Schmalbandfilter (4a) verschiedenes, auf eine zweite oder weitere Gaskomponente ein und derselben Flamme (1) abgestimmtes optisches Schmalbandfilter (4b) aufweist, und mit einem ersten Detektor, der die durch das erste Filter hindurchtretende Strahlung erfaßt und ein erstes Detektorausgangsspannungssignal bildet, und mit einem weiteren, die durch das zweite Schmalbandfilter (4b) hindurchtretende Strahlung (5b, 6b) erfassenden und ein Detektorausgangsspannungssignal bildenden Detektor (7b) sowie mit einer nach dem Prinzip der lock-in-Technik arbeitenden Signalverarbeitungsschaltung, der die Detektorausgangsspannungssignale zugeführt sind,
**dadurch gekennzeichnet**,
daß die jeweils durch die Schmalbandfilter (4a, 4b) hindurchtretende Strahlung in der der Flamme (1) aufgeprägten natürlichen Flackerfrequenz, d.h. ohne daß ein Chopper zwischengeschaltet ist, den Detektoren (7a, 7b) zugeführt ist und daß zur Unterdrückung derjenigen Detektorausgangsspannungssignalanteile, die von den durch die Filter (4a, 4b) hindurchtretenden Hintergrund- bzw. Störstrahlungsanteilen (5a, 5b) herrühren, der Signalverarbeitungsschaltung das Ausgangsspannungssignal des einen Detektors (7a bzw. 7b) als Referenzsignal im Sinne der lock-in-Technik für das Ausgangsspannungssignal des anderen Detektors (7b bzw. 7a) zugeführt ist.

6. Anordnung nach Anspruch 5,
**dadurch gekennzeichnet**,
daß die Signalverarbeitungsschaltung einen ersten Demodulator (10a) und einen ersten Komparator (11a) aufweist, denen eingangsseitig nach kapazitiver GleichspannungsTrennung und Verstärkung das Ausgangsspannungssignal des ersten Detektors (7a) zugeführt ist, und daß die Signalverarbeitungsschaltung einen zweiten Demodulator (10b) und einen zweiten Komparator (11b) aufweist, denen eingangsseitig nach kapazitiver Gleichspannungs-Trennung und Verstärkung das Ausgangsspannungssignal des zweiten Detektors (7b) zugeführt ist, wobei der erste Komparator (11a) zur Erzeugung eines Referenzsignales dient, mit dem der zweite Demodulator (10b) beaufschlagt ist, und der zweite Komparator (11b) zur Erzeugung eines Referenzsignales dient, mit dem der erste Demodulator (10a) beaufschlagt ist und daß den Demodulatoren (10a, 10b) jeweils ein Tiefpaßfilter (12a bzw. 12b) nachgeschaltet ist.

## Claims

1. Process of industrial flame spectral analysis by optical emission measurement, wherein an optical narrow-band filter is employed to separate the radiation of a flame and/or its burnt gases, which is emitted within a comparatively narrow band, and the simultaneously present, comparatively wide-band fractions of a background or interfering radiation, and wherein the radiation transmitted through the filter is detected,
**characterized in**
that the emissions of at least two gas components of one and the same flame (1) are detected simultaneously and independently at the natural flickering frequency, i.e. without a chopper, by using a first detector (7a) for receiving the radiation (5a, 6a) transmitted through a first narrow-band filter (4a) adjusted to a first gas component, and for forming a first detector output signal, and by using a second detector (7b) for receiving a second radiation transmitted through a second narrow-band filter (4b) adjusted to a second gas component, and for forming a second detector output signal, and that the correlation of the derivative trend with respect to time of the detector output signals is referred to for subsequent detector output signal processing, on account of the same natural flickering frequency of the flame, which is imprinted on the gas components, so as to suppress those detector output signal fractions which are produced by said background or interfering radiation fractions (5a, 5b) passing through said filters (4a, 4b).

2. Process according to Claim 1,
**characterized in**
that absorption measurement is performed instead of emission measurement, by detecting radiation absorbed by said flame (1) and/or its burnt gases.

3. Process according to Claim 1 or 2,
**characterized in**
that the detector output signal fractions created by background or interfering radiation fractions (5a, 5b) are suppressed in a manner analogous to the principle of phase-sensitive rectification (lock-in technique).

4. Process according to any of Claims 1 to 3,
**characterized in**
that a combustion process producing said flame (1) is controlled as a function of the detector output signals freed of their detector output signal fractions caused by background or interfering radiation fractions (5a, 5b).

5. System for industrial flame spectral analysis by optical emission measurement, comprising a first narrow-band optical filter (4a) and at least one further narrow-band optical filter (4b) other than said first narrow-band filter, which is adjusted to a second or further gas component of the same flame, and comprising a first detector for detecting the radiation transmitted through said first filter and for forming a first detector output voltage signal, and a further detector (7b) for detecting said radiation (5b, 6b) transmitted through said second narrow-band filter (4b) and for forming a detector output voltage signal, as well as a signal processing circuit operating on the principle of the lock-in technique, to which said detector output voltage signals are supplied,
**characterized in**
that the respective radiation transmitted through said narrow-band filters (4a, 4b) is applied to said detectors (7a, 7b) at the natural flickering frequency imprinted on said flame (1), i.e. without interposition of a chopper, and that the output voltage signal of one of said detectors (7a or 7b, respectively) is supplied to said signal processing circuit as a reference signal in the sense of lock-in technique for the output voltage signal of the respectively other detector (7b or 7a, respectively) for suppression of those detector output voltage signal fractions which are due to said background or interfering radiation fractions (5a, 5b) transmitted through said filters (4a, 4b).

6. System according to Claim 5,
**characterized in**
that said signal processing circuit comprises a first demodulator (10a) and a first comparator (11a), to which the output voltage signal of said first detector (7a) is applied on the input side, after capacitive D.C. separation and amplification, and in that said signal processing circuit comprises a second demodulator (10b) and a second comparator (11b), to which the output voltage signal of said second detector (7b) is applied on the input side, after capacitive D.C. voltage separation and amplification, wherein said first comparator (11a) serves to generate a reference signal for application to said second demodulator (10b), and said second comparator (11b) serves to generate a reference signal for application to said first demodulator (10a), and that a respective low-pass filter (12a or 12b, respectively) is connected on the output side of each of said demodulators (10a, 10b).

## Revendications

1. Procédé d'analyse spectrale de flammes industrielles par mesurage optique des émissions, dans lequel on divise, moyennant un filtre optique à bande étroite, le rayonnement d'une flamme et/ou de ses gaz perdus, qui est émis dans une bande relativement étroite, et les fractions d'un rayonnement de fond ou respectivement perturbateur, qui sont présentes simultanément dans une bande relativement large, et dans lequel le rayonnement traversant le filtre est détecté,
**caractérisé en ce**
qu'on détecte, en même temps et indépendamment, les émissions d'au moins deux composants de gaz de la même flamme (1) à une fréquence de vacillement naturelle, c.-à-d. sans vibrateur, moyennant la réception, par un premier détecteur (7a), du rayonnement (5a, 6a) qui traverse un premier filtre à bande étroite (4a), accordé à un premier composant de gaz, en formant un premier signal de sortie du détecteur, et la réception, par un deuxième détecteur (7b), du rayonnement qui traverse un deuxième filtre à bande étroite (4b), accordé à un deuxième composant de gaz, en formant un deuxième signal de sortie du détecteur, que la corrélation des lois en fonction du temps desdits signaux de sortie desdits détecteurs est utilisée, en vertu de la même fréquence de vacillement de la flamme, qui est empreinte sur lesdits composants de gaz, dans le traitement ultérieur desdits signaux de sortie desdits détecteurs, afin de supprimer celles fractions des signaux de sortie des détecteurs, qui sont engendrées par les fractions de fond ou respectivement perturbateurs (5a, 5b) qui traversent lesdits filtres (4a, 4b).

2. Procédé selon la revendication 1,
**caractérisée en ce**
qu'un mesurage d'absorption est réalisé, au lieu du mesurage des émissions, par détection du rayonnement absorbé par la flamme (1) et/ou de ses gaz perdus.

3. Procédé selon la revendication 1 ou 2,
**caractérisée en ce**
que les fractions des signaux de sortie des détecteurs, qui sont produites par des fractions de rayonnement de fond ou respectivement perturbateur (5a, 5b), sont supprimées de façon analogue au principe de redressement sensible en vue des phases (technique de verrouillage ou dite *lock-in*).

4. Procédé selon une quelconque des revendications 1 à 3,
**caractérisée en ce**
qu'un processus de combustion, qui produit ladite flamme (1), est commandé en fonction des signaux de sortie des détecteurs, libérés de leurs fractions des signaux de sortie des détecteurs provoquées par fractions de rayonnement de fond ou respectivement perturbateur (5a, 5b).

5. Système d'analyse spectrale de flammes industrielles par mesurage optique des émissions, qui comprend un premier filtre optique à bande étroite et au moins un autre filtre optique à bande étroite (4b), différent dudit premier filtre à bande étroite et accordé à un deuxième ou autre composant de gaz de la même flamme, et comprenant un premier détecteur qui détecte le rayonnement traversant ledit premier filtre et engendre un premier signal de tension de sortie du détecteur, et comprenant un autre détecteur (7b), qui détecte le rayonnement (5b, 6b) traversant ledit deuxième filtre à bande étroite (4b) et engendre un signal de tension de sortie du détecteur, ainsi qu'un circuit de traitement de signaux, qui fonctionne à la base du principe de la technique de verrouillage ou dite *lock-in,* auquel circuit sont alimentés les signaux de tension de sortie des détecteurs,
**caractérisée en ce**
que le rayonnement respectif, qui traverse lesdits filtres à bande étroite (4a, 4b) est appliqué auxdits détecteurs (7a, 7b) à sa fréquence de vacillement naturelle empreinte sur la flamme (1), c.-à-d. sans intercalage d'un vibrateur, et que pour la suppression des fractions des signaux de tension de sortie des détecteurs, qui sont dues aux fractions de rayonnement de fond ou respectivement perturbateur (5a, 5b), qui traverse lesdits filtres (4a, 4b), le signal de tension de sortie de l'un desdits détecteurs (7a ou respectivement 7b) est appliqué, comme signal de référence au sens de la technique dite *lock-in* pour le signal de tension de sortie du respectivement autre détecteur (7b ou respectivement 7a), audit circuit de traitement des signaux.

6. Système selon la revendication 5,
**caractérisée en ce**
que ledit circuit de traitement de signaux comprend un premier démodulateur (10a) et un premier comparateur (11a), auxquels est appliqué, du côté d'entrée, le signal de tension de sortie dudit premier détecteur (7a), après séparation capacitive de tension continue et après amplification, et en ce que ledit circuit de traitement des signaux comprend un deuxième démodulateur (10b) et un deuxième comparateur (11b), auxquels est appliqué, du côté d'entrée, le signal de tension de sortie dudit deuxième détecteur (7b), après séparation capacitive de tension continue et après amplification, dans lequel ledit premier comparateur (11a) sert à engendrer un signal de référence à appliquer audit deuxième modulateur (10b), et ledit deuxième comparateur (11b) sert à engendrer un signal de référence à appliquer audit premier démodulateur (10a), et en ce qu'un filtre passe-bas respectif (12a ou respectivement 12b) est disposé en aval de chacun desdits démodulateurs (10a, 10b).
